Europäisches Patentamt

European Patent Office

Office européen des brevets

(11) Numéro de publication: **0 231 756**
**A1**

## (12) DEMANDE DE BREVET EUROPEEN

(21) Numéro de dépôt: 87100145.9

(22) Date de dépôt: 08.01.87

(51) Int. Cl.⁴: **H02M 3/337** , **H02M 7/538**

(30) Priorité: 08.01.86 FR 8600179

(43) Date de publication de la demande:
**12.08.87 Bulletin 87/33**

(84) Etats contractants désignés:
**AT BE CH DE ES FR GB IT LI NL SE**

(71) Demandeur: **ALSTHOM**
**38, avenue Kléber**
**F-75784 Paris Cédex 16(FR)**

(72) Inventeur: **Volut, Serge**
**32, rue de la Baisse**
**F-69100 Villeurbanne(FR)**

(74) Mandataire: **Weinmiller, Jürgen et al**
**Lennéstrasse 9 Postfach 24**
**D-8133 Feldafing(DE)**

(54) **Onduleur à double résonance.**

(57) L'onduleur comporte deux interrupteurs statiques (3, 4) commandés en opposition de phase, disposés en série aux bornes d'une source d'alimentation à point milieu (1, 2) et reliés par leur point d'interconnexion au point milieu de la source d'alimentation par une liaison comportant, en série d'une part le primaire (11) d'un transformateur (10) dont le secondaire (12) alimente un pont redresseur (13, 14, 15, 16) délivrant la tension de sortie de l'onduleur et d'autre part, un circuit oscillant qui est formé d'un condensateur (8) en série avec une inductance (7) et en parallèle avec une autre inductance (9) et qui a une fréquence de resonance série supérieure à sa fréquence de résonance parallèle. Cet onduleur a une tension de sortie réglable au moyen de sa fréquence de fonctionnement est maintenue entre les fréquences de résonance série et parallèle.

FIG. 2

Onduleur à double résonance

# Onduleur à double résonance

La présente invention est relative à la conversion isolée galvaniquement ou non d'une tension continue en une autre tension continue d'amplitude réglable. Elle concerne plus particulièrement les onduleurs à résonance hachant le courant fourni par une source d'alimentation continue au moyen d'interrupteurs statiques qui sont placés aux bornes de la source en série avec un circuit oscillant série et commutent à la fréquence de résonance et à courant nul.

Cette particularité des onduleurs résonnants d'avoir leurs interrupteurs statiques qui commutent à courant nul leur donne de très faibles pertes de commutation et autorise un fonctionnement à fréquence élevée ultrasonore réduisant notablement la masse des éléments passifs du convertisseur tout en conservant un rendement de conversion élevé.

Les onduleurs résonnants ont cependant l'inconvénient de ne pas permettre le réglage de leur tension de sortie sans perdre les avantages liés à leur fonctionnement à fréquence élevée. En effet, un tel réglage nécessite de faire varier la fréquence de commutation des interrupteurs statiques au lieu de la maintenir égale à la fréquence de résonance. Un fonctionnement à fréquence plus élevée que la fréquence de résonance n'est pas envisageable car il provoque l'ouverture des interrupteurs statiques à courant non nul ce qui entraîne des pertes de commutation. Un fonctionnement à fréquence plus basse que la fréquence de résonance est possible mais l'on s'aperçoit qu'il faut faire varier la fréquence de fonctionnement dans de grandes proportions et que pour de faibles valeurs des tension de sortie et de fortes valeurs de résistance de charge, le courant délivré par la source d'alimentation a une composante à basse fréquence difficile à filtrer.

La présente invention a pour but de pallier aux inconvénients précités en autorisant un réglage de la tension de sortie par une variation de fréquence tout en conservant une commutation à courant nul et une fréquence de fonctionnement élevée.

Elle a pour objet un onduleur résonnant comportant au moins deux interrupteurs statiques commandés en opposition de phase, disposés en série aux bornes d'une source d'alimentation à point milieu et reliés par leur point de connexion au point milieu de la source par une liaison qui présente l'impédance d'un circuit oscillant formé d'une capacité en série avec une première inductance et en parallèle avec une deuxième inductance ayant une fréquence de résonance série supérieure à la fréquence de résonance parallèle.

La plage de fonctionnement est comprise entre les deux fréquences de résonance qui sont avantageusement dans un rapport voisin de deux, la deuxième inductance ayant alors une valeur quatre à cinq fois supérieure à celle de la première inductance.

Selon un mode préféré de réalisation, la liaison reliant le point de connexion des interrupteurs statiques comporte en série, le primaire d'un transformateur dont le secondaire alimente un circuit redresseur délivrant la tension de sortie de l'onduleur et un circuit oscillant formé d'un condensateur en parallèle sur une inductance qui constitue la dite deuxième inductance, la première inductance étant constituée par l'inductance de fuite du transformateur.

Selon une variante, le condensateur et son inductance en parallèle sont ramenés au secondaire du transformateur en tenant compte du rapport de transformation.

D'autres caractéristiques et avantages de l'invention ressortiront de la description ci-après de plusieurs modes de réalisation donnés à titre d'exemple.

Cette description sera faite en regard du dessin dans lequel :
    -la figure 1 représente un onduleur résonnant de l'art antérieur,
    -la figure 2 représente un onduleur résonnant selon l'invention
    -les figure 3, 4, et 5 sont des diagrammes illustrant le fonctionnement de l'onduleur représenté à la figure 2 et
    -la figure 6 une variante de l'onduleur représenté à la figure 3.

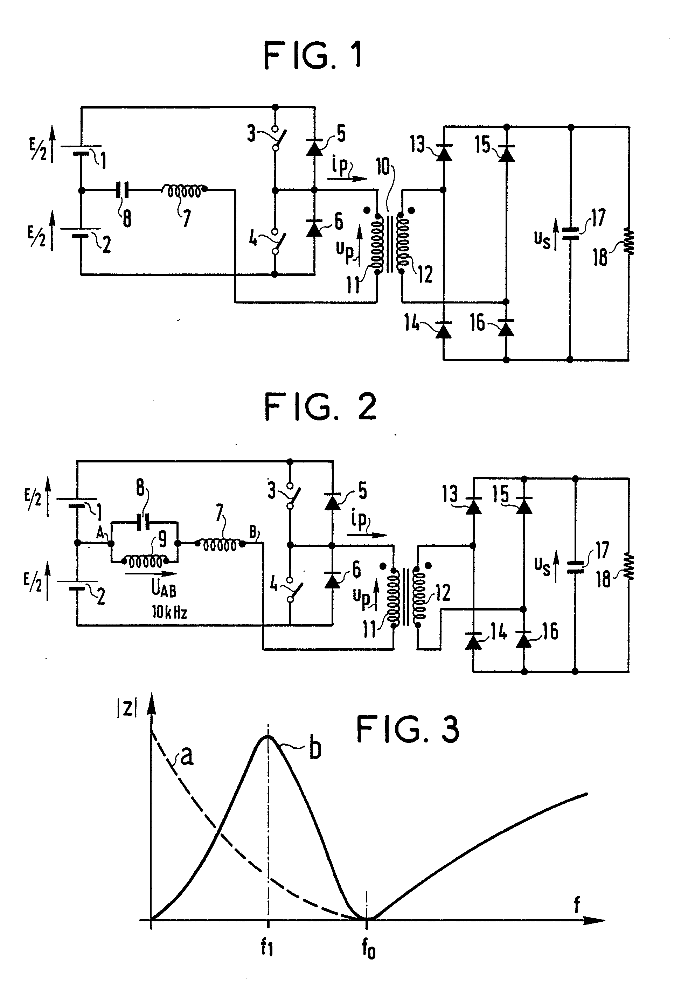

Sur la figure 1 on distingue un onduleur résonnant de l'art antérieur alimenté par une source de tension continue à point milieu 1, 2 et débitant sur une charge 18.

Cet onduleur résonnant comporte deux interrupteurs commandés 3, 4 placés en série aux bornes de la source de tension continue d'alimentation 1, 2 leur point d'interconnexion étant relié au point milieu de la source de tension continue par une liaison formée de la mise en série du primaire 11 d'un transformateur 10 et d'un circuit résonnant série constitué d'une inductance 7 et d'un condensateur 8. Des diodes de roue libre 5, 6 sont placées en antiparallèle sur chaque interrupteur commandé 3, 4. Le secondaire 12 du transformateur 10 alimente un pont de diodes de redressement 13, 14, 15, 16 qui débite dans un condensateur de filtrage 17 placé en parallèle sur la charge.

2

Les interrupteurs statiques 3, 4 sont commandés en opposition de phase à une fréquence fo égale à la fréquence de résonance du circuit série constitué par le condensateur 8 et l'inductance 7. Dans ces conditions, le circuit résonnant série présente une impédance voisine de zéro et la tension Up aux bornes du primaire 11 du transformateur 10 a une allure carrée symétrique avec une amplitude égale alternativement à + E/2 et - E/2 à la fréquence fo considérée. Le courant Ip au primaire du transformateur est en phase avec la tension primaire grâce à la présence du pont de diodes de redressement 13, 14, 15, 16, et a de plus une allure sinuoïdale due au phénomène de résonance. Les interrupteurs statiques 3, 4 commutent alors à courant nul.

Cette particularité de l'onduleur résonnant de commuter à courant nul permet l'annulation des pertes de commutations et autorise un fonctionnement à une fréquence élevée, ultrasonore réduisant notablement la masse des éléments passifs tout en conservant un rendement de conversion élevé.

Deux possibilités sont offertes pour permettre à ce convertisseur de faire varier la tension de sortie Us:

La première solution consiste à commander les interrupteurs statiques 3 et 4 à une fréquence supérieure à la fréquence de résonance du circuit série constitué du condensateur 8 et de l'inductance 7. L'impédance de ce circuit s'accroît et devient inductive abaissant par la même, la tension appliquée au primaire 11 du transformateur 10 et par conséquent la tension de sortie Us du convertisseur. Le réglage de cette tension de sortie est alors possible mais les interrupteurs statiques 3 et 4 s'ouvrent alors que l'impulsion de courant due au circuit oscillant ne s'est pas encore annulée ce qui provoque des pertes de commutation interdisant un fonctionnement à fréquence élevée.

La deuxième solution consiste à commander les interrupteurs stati ques 3 et 4 à une fréquence inférieure à la fréquence de résonance du circuit série constitué du condensateur 8 et de l'inductance 7. L'impédance de ce circuit s'accroît et devient capacitive abaissant par la même la tension appliquée au primaire 11 du transformateur 10 et la tension de sortie Us du convertisseur. Le réglage de la tension de sortie du convertisseur s'effectue sans pertes de commutation puisque les interrupteurs statiques 3 et 4 s'ouvrent alors que l'impulsion de courant due au circuit oscillant s'est renversée. Malheureusement il faut faire varier la fréquence de fonctionnement dans de grande proportion, la fréquence de fonctionnement étant très faible pour de faibles tensions de sortie et de fortes valeurs de résistance de charge et la composante basse fréquence du courant fourni par la source d'alimentation difficile à filtrer.

La figure 2 représente un onduleur résonnant selon l'invention qui remédie à ce dernier inconvénient et permet de maintenir une fréquence de fonctionnement élevée indispensable pour la réduction de la masse des éléments passifs. Cet onduleur reprend l'ensemble des éléments de l'onduleur résonnant décrit précédemment et comporte en plus une deuxième inductance 9 en parallèle sur le condensateur 8.

La deuxième inductance 9 modifie la loi de variation du module de l'impédance du circuit oscillant en fonction de la fréquence de fonctionnement, par l'introduction d'une fréquence de résonance parallèle f1 inférieure à la fréquence de résonance série fo. Comme on peut le voir sur la figure 3 qui représente en a la courbe de variation en fonction de la fréquence du module de l'impédance du condensateur 8 en série avec la première inductance 7 mais sans la seconde et en b cette même courbe de variation en présence de la deuxième inductance 9, on obtient en réponse à une diminution de la fréquence de fonctionnement depuis la fréquence de résonance série fo un accroissement du module de l'impédance beaucoup plus rapide en présence de la deuxième inductance 9 et ce, jusqu'à la fréquence de résonance parallèle f1. Comme cette impédance est en série avec la charge de l'onduleur, son accroissement beaucoup plus rapide permet de limiter l'amplitude de la variation de fréquence de fonctionnement nécessaire au réglage de la tension de sortie de l'onduleur et de maintenir dans tous les cas une fréquence de fonctionnement élevée.

On peut par exemple dimensionner le condensateur 8 et la première inductance 7 pour obtenir une fréquence de résonance série de 20 Khz et la deuxième inductance 9 pour obtenir une fréquence de résonance parallèle de 10 Khz. Le rapport des deux inductances 7, 9 est de préférence de 4 à 5. La première inductance peut être constituée par l'inductance de fuite du transformateur 10.

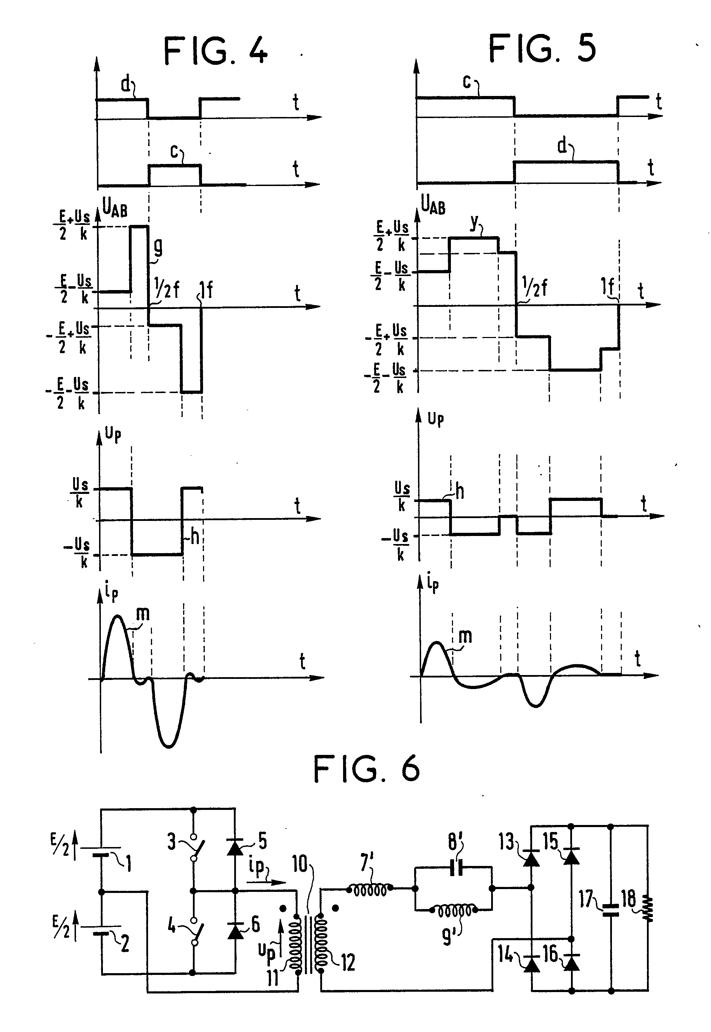

La figure 4 est un ensemble de diagrammes illustrant le fonctionnement de l'onduleur représenté à la figure 2 dans le cas où sa fréquence de fonctionnement est proche de la fréquence de résonance série fo. La courbe c représente l'état de conduction en fonction du temps de l'interrupteur statique 3, la courbe d l'état de conduction en fonction du temps de l'interrupteur statique 4, la courbe g la variation en fonction du temps de la tension se développant aux bornes A B du circuit résonnant, la courbe h de la variation en fonction du temps de la tension Up aux deux bornes du primaire 11 du transformateur 10 et la courbe m la variation de courant Ip tranversant le primaire 11 du transformateur 10.

La figure 5 représente le même ensemble de diagrammes que celui de la figure 4 dans le cas où la fréquence de fonctionnement est proche de la fréquence de résonance parallèle.

Pour expliciter le fonctionnement, on se place en régime établi à un instant initial où l'interrupteur statique 4 reçoit un ordre d'ouverture et l'interrupteur statique 3 un ordre de fermeture alors que le courant Ip traversant le primaire du transformateur 10 est nul ou presque nul et que le condensateur 8 a une charge -Vo fonction de la fréquence de fonctionnement.

La fermeture de l'interrupteur statique 3 provoque la charge oscillante du condensateur 8 à la tension E/2 amplifiée puis amortie d'une manière de plus en plus prononcée au cours du temps par la présence de la deuxième inductance 9. Au début de cette charge oscillante, la tension Uab passe à la valeur E/2-Us/k, k étant le rapport du transformateur 10. Une impulsion de courant se développe au travers de la première inductance 7 induisant au secondaire du transformateur 10 une tension supérieure à la tension de déblocage des diodes 13, 14, 15, et 16 du pont redresseur et fournissant de l'énergie à la charge 18. Cette impulsion de courant accroît la charge du condensateur 8 jusqu'à une valeur supérieure à E/2 + Us/k ce qui provoque une deuxième impulsion de courant en sens inverse qui traverse la diode de roue libre 5 tout en induisant au secondaire du transformateur 10 une tension supérieure à la tension de déblocage des diodes 13, 14, 15 et 16 du pont redresseur et en fournissant de l'énergie à la charge 18.

Lorsque la fréquence de fonctionnement est proche de la fréquence de résonance série, la fin de cette deuxième impulsion coïncide pratiquement avec l'inversion des ordres de commande des interrupteurs statiques 3 et 4 si bien que la commutation s'effectue à courant nul.

Lorsque la fréquence de fonctionnement est inférieure à la fréquence de résonance série mais supérieure à la fréquence de résonance parallèle, cette deuxième impulsion est suivie d'une période où le courant Ip traversant le primaire du condensateur 10 reste quasiment nul. En effet, à la fin de cette deuxième impulsion la tension de décharge atteinte par le condensateur 8 n'est plus suffisamment basse par rapport au potentiel E/2 pour induire au primaire de transformateur 10 une tension supérieure à (Vs/k) nécessaire pour débloquer son circuit secondaire de sorte que le transformateur présente une forte impédance au courant de charge du condensateur 8 dont il bloque la croissance avec l'aide de la deuxième inductance 9 ce qui permet une commutation à courant quasi nul.

La deuxième inductance 9 en parallèle sur le condensateur 8 est parcourue au départ par un courant dans le sens de la charge du condensateur 8 tendant à s'opposer aux variations de tension à ses bornes et par conséquent à amplifier la première impulsion de courant ip. Ce courant dans la deuxième inductance 9 s'inverse au fur et à mesure de la charge du condensateur 8 qu'il contrecarre par ses variations entraînant un allongement de la première impulsion du courant Ip et un amortissement prononcé de la deuxième.

Lorsque la fréquence de fonctionnement se rapproche de la fréquence de résonance parallèle, l'effet d'allongement des impulsions de courant ip et leur atténuation de plus en plus prononcée au cours du temps apparaissent plus nettement, le courant traversant la deuxième inductance 9 atteignant après la deuxième impulsion du courant Ip une valeur suffisante pour amortir complètement la troisième oscillation du courant Ip et le maintenir à une valeur quasi nulle.

La figure 6 représente une variante de l'onduleur résonnant représenté à la figure 2 dans laquelle le circuit oscillant a été reporté au secondaire du transformateur 10 en tenant compte de son rapport k de transformation. Comme on peut le voir sur cette figure, le circuit oscillant 7, 8, 9 a été supprimé du circuit primaire du transformateur 10 et remplacé par un circuit oscillant 7', 8', 9' disposé au secondaire du transformateur, les inductances 7' et 9' ayant les valeurs des inductances 7 et 9 dans le rapport $1/k^2$ et le condensateur 8' ayant une valeur $k^2$ fois supérieure à celle du condensateur 8. Cette variante présente un intérêt dans la mesure où pour des questions de dimensionnement de composant, il est préférable que le circuit oscillant soit placé du côté haute tension du transformateur pour qu'il soit parcouru par un minimum de courant. Comme dans le cas précédent, l'inductance 7' en série avec le condensateur 8' est avantageusement constituée de l'inductance de fuite du transformateur 10 qui est dimensionné en conséquence.

On peut, sans sortir du cadre de l'invention modifier certaines dispositions ou remplacer certains moyens par les moyens équivalents.

## Revendications

1/ Onduleur résonnant comportant au moins deux interrupteurs statiques (3, 4) commandés en opposition de phase et disposés en série aux bornes d'une source d'alimentation à point milieu (1, 2) caractérisé en ce que les dits interrupteurs statiques (3, 4) sont reliés par leur point d'interconnexion au point milieu de la source d'alimentation - (1, 2) au moyen d'une liaison présentant l'impédance d'un circuit oscillant ayant un condensateur (8) en série avec une première inductance - (7) et en parallèle avec une deuxième inductance - (9), avec une fréquence de résonance série (fo) supérieure à la fréquence de résonance parallèle - (f1).

2/ Onduleur selon la revendication 1 caractérisé en ce que ladite liaison comporte en série le primaire (11) d'un transformateur (10) dont le secondaire (12) alimente un circuit redresseur (13, 14, 15, 16) délivrant la tension de sortie de l'onduleur et un circuit oscillant formé d'un condensateur (8) en série avec une inductance (7) et en parallèle avec une autre inductance (9).

3/ Onduleur selon la revendication 2 caractérisé en ce que l'inductance (7) en série avec le condensateur 8 est constituée de l'inductance de fuite du transformateur (10) qui est dimensionné ce conséquence.

4/ Onduleur selon la revendication 1 caractérisé en ce que ladite liaison est constituée du primaire d'un transformateur (10) dont le secondaire est connecté en série avec d'une part un circuit oscillant formé d'un condensateur en série avec une inductance et en parallèle avec une autre inductance, et avec d'autre part un circuit redresseur (13, 14, 15, 16) délivrant la tension de sortie de l'onduleur.

5/ Onduleur selon la revendication 4 caractérisé en ce que l'inductance (7') en série avec le condensateur (8') est constituée de l'inductance de fuite du transformateur (10) qui est dimensionné en conséquence.

# FIG. 1

# FIG. 2

# FIG. 3

# FIG. 4

# FIG. 5

# FIG. 6

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 446 557 (R.TELLERT)<br>* Page 8, lignes 4-23; page 12, lignes 23-26; figure 1 * | 1 | H 02 M 3/337<br>H 02 M 7/538 |
| | --- | | |
| A | COMPUTER DESIGN, vol. 16, no. 3, mars 1977, pages 91-97, Chatsworth, California, US; J.H.BURENS: "Switching power supplies: specification criteria"<br>* Figure 1(C) * | 1,3 | |
| | --- | | |
| A | IEEE TRANSACTIONS ON INDUSTRY APPLICATIONS, vol. IA-18, no. 3, mai/juin 1982, pages 279-287, IEEE, New York, US; V.T.RANGANATHAN et al.: "A regulated DC-DC voltage source converter using a high frequency link"<br>* Figure 1 * | 1 | |

DOMAINES TECHNIQUES RECHERCHES (Int. Cl.4)

H 02 M

Le présent rapport de recherche a été établi pour toutes les revendications

| Lieu de la recherche | Date d'achèvement de la recherche | Examinateur |
|---|---|---|
| LA HAYE | 20-05-1987 | MOUEZA, A.J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82